# EUROPEAN PATENT SPECIFICATION

(11) **EP 1 737 560 B1**
(45) Date of publication and mention of the grant of the patent: **09.02.2011**
(21) Application number: 05734968.0
(22) Date of filing: 15.04.2005
(51) Int. Cl.: B01D 69/08, B01D 71/06

(54) **PROCESS FOR PRODUCING HOLLOW CAPILLARY POLYMERIC MEMBRANES FOR THE TREATMENT OF BLOOD AND ITS DERIVATIVES**
VERFAHREN ZUR HERSTELLUNG VON POLYMEREN HOHLKAPILLARMEMBRANEN ZUR BEHANDLUNG VON BLUT UND DESSEN DERIVATEN
PROCEDE POUR LA PRODUCTION DE MEMBRANES POLYMERIQUES CAPILLAIRES CREUSES POUR LE TRAITEMENT DU SANG ET DE SES DERIVES

(30) Priority: 19.04.2004 IT RM20040193
(43) Date of publication of application: 03.01.2007
(73) Proprietor: Lysitech SRL, I-80100 Napoli (IT)
(72) Inventor: REVERCHON, Ernesto Università degli Studi di Salerno, I-84084 Fisciano(SA) (IT)
(74) Representative: Banchetti, Marina
(86) International application number: PCT/IT2005/000220
(87) International publication number: WO 2005/099878

(56) References cited:
- EP-A- 0 824 960
- EP-A- 0 850 678
- EP-A- 0 997 182
- MATSUYAMA H ET AL: "Effect of organic solvents on membrane formation by phase separation with supercritical CO2" JOURNAL OF MEMBRANE SCIENCE, ELSEVIER SCIENTIFIC PUBL.COMPANY. AMSTERDAM, NL, vol. 204, no. 1-2, 15 July 2002 (2002-07-15), pages 81-87, XP004360312 ISSN: 0376-7388
- LUNA-BARCENAS G ET AL: "Semicrystalline microfibrils and hollow fibres by precipitation with a compressed-fluid antisolvent" POLYMER, ELSEVIER SCIENCE PUBLISHERS B.V, GB, vol. 36, no. 16, August 1995 (1995-08), pages 3173-3182, XP004025657 ISSN: 0032-3861
- KHO Y W ET AL: "Precipitation of Nylon 6 membranes using compressed carbon dioxide" POLYMER, ELSEVIER SCIENCE PUBLISHERS B.V, GB, vol. 42, no. 14, June 2001 (2001-06), pages 6119-6127, XP004233540 ISSN: 0032-3861
- REVERCHON E ET AL: "Formation of cellulose acetate membranes using a supercritical fluid assisted process" JOURNAL OF MEMBRANE SCIENCE, ELSEVIER SCIENTIFIC PUBL.COMPANY. AMSTERDAM, NL, vol. 240, no. 1-2, 1 September 2004 (2004-09-01), pages 187-195, XP004520577 ISSN: 0376-7388

## Description

This invention is related to a process for the production of hollow capillary polymeric membranes to be used for the treatment of blood and its derivatives. More specifically, the invention concerns the production of hollow capillary membranes to be used preferably (but not exclusively) in the field of blood and its derivatives processing; for example, hemodialysis, hemodiafiltration and hemofiltration, using supercritical fluids instead of organic solvents.

It is well known that a semi-permeable membrane used in dialysis is substantially a porous polymeric structure formed by interconnected pores uniformly distributed and approximately of the same diameter. When a membrane is put between two fluid phases, only molecules with size lower than pores diameter and/or with given characteristics of affinity with the polymer forming the membrane can pass through the membrane itself, whereas, all the other molecules are excluded (rejected). In the use of such membranes for hemodialysis, the most common uremic toxins (urea, phosphates, potassium) that have a low molecular weight, pass through the membrane and are eliminated, while proteins that are useful for the organism (and have a high molecular weight) do not pass through the membrane.

Molecular dimensions are not the only factor that determin es dialyzation; another important factor is the capacity of a molecule to bind water molecules by electrostatic bindings. The physical aggregate that is formed has larger size than the molecule alone and has reduced dialyzability.

Moreover, electric charges that are located on a molecule can influence its capacity to cross the dialysis membrane depending on the fact that the membrane has on its surface electric charges of the same or of the opposite sign.

It is known that dialysis has been the first membrane sepa ration process that has been developed, and hemodialysis is the most diffused application of this kind of process. The first artificial membrane used for dialysis has been made in polyacrylonitrile. Subsequently, polysulfone membranes have been developed that have a good depurative capacity for molecules u p to 40,000 dalton.

Among the various techniques used to produce polymeric semipermeable membranes, the most diffused are based on phase inversion processes, or phase separation processes, in which the polymer used to produce the membrane is solubilized in a solvent and the solution is cast onto a support to obtain a film. Then, a precipitating agent is added (the non-solvent), that is miscible with the solvent, but, in which the polymer is not soluble. It causes the separation of two phases, one is rich in solvent and non-solvent and the other one is rich in polymer. This second phase solidifies form ing a porous structure formed by interconnected cells that are characterized by a sharp diameter size distribution.

An example of process to produce polysulfone porous membranes is described in EP-A-764461, proposing the use of a mixture of two polysulfone based polymers to obtain asymmetric membranes; i.e., membranes with pores whose mean diameters vary continuously through the cross-section of the membrane. The part with larger pores has only the function of mechanical support, whereas, the part with smaller pores is useful to perform the separation. According to this patent, it is possible to obtain flat or capillary membranes. Flat membranes are obtained by dissolving the polymers in an organic solvent, casting a film of the obtained solution on a support and immersing it in a coagulation bath containing a water-based solution. Capillary membranes are obtained by extrusion of the polymers-solvent solution through an annular orifice (liquid solution spinning process); in the internal hole of the orifice a water-based solution is co-extruded. Then, the obtained fibre is immersed in a coagulation bath, containing a water-based solution, to eliminate the organic solvent and produce a solid membrane structure.

In the case of the medical applications considered in this invention, capillary membranes are arranged in modules formed by a large number of capillary membrane elements assembled in parallel and inserted into a tubular shell. The liquid to be treated is fed to the internal side of the capillary tubes, the compounds to be eliminated pass through the membrane and are collected outside the capillaries in the shell. All the other compounds forming the liquid are collected at the exit of the capillary tubes. For this kind of applications, traditional techniques used for the production of hollow capillary membranes, based on the liquid solution-spinning process, use solutions of one or more polymers in one or more organic solvents and, in some cases, of one or more non-solvents for the polymer that have a large affinity with the solvents used. As previously noted, the polymer-solvent solution is sent into the screw of the extruder and forced through a spinneret that produces the shape of hollow capillary tube. The contact with the non-solvent can start inside the extruder and is, in any case, completed into the coagulation bath located downstream the extruding orifice.

It is worth noting that the contact between solvent and non-solvent is the key step of the process for the membrane formation, since, during this step solvent and non-solvent form a liquid solution that excludes the polymer; meanwhile, a second polymer-rich phase is formed from which the solvent is progressively extracted (phase separation). The polymer-rich phase evolves through a gel transition and, continuing solvent extraction, produces the solid structure with connected pores that forms the membrane.

A process to produce hollow capillary porous membranes to be used for hemodialysis is described in EP-A-850678, disclosing a liquid solution spinning method that is substantially similar to the one previously described. In this case the capillary tube can be extruded directly into the coagulation bath or extruded first in air and, then, through the coagulation bath where it can be kept for some hours. Then, the capillary tube is washed with water (leaching) to eliminate the residues of all the undesired compounds. According to a specific process modification proposed in this patent, it is possible to add a surfactant and a hydrophobic modifier to the solution flowing inside the hole of the capillary tube. This compound is deposited on the internal surface of the membrane. Also in this case the specific non-solvent used is water, in view of its strong capacity to coagulate the solution.

A modification of the liquid solution-spinning process is described in the international patent application WO 98/29478, that uses the melt-spinning technology to produce capillary membranes based on polysulfone polymers. In this case, the polymer-solvent (and eventually non-solvent) mixture is melted and, then, extruded through a spinneret. The process temperature has to be sufficient to produce a solution with a relatively low viscosity that it will be possible to extrude; however, solvent and non-solvent evaporation and polymer degradation have to be avoided. In any case, solvent and non-solvent in the mixture have to be in the right proportion to allow the membrane formation according to the phase separation process. In this process too, it is possible to add a further liquid to be fed to the internal part of the capillary tube to prevent membrane collapse. Downstream the sp inneret the solution is cooled and a solid structure is formed. The cooling can be performed in air or in a coagulation bath in which a liquid non-solvent has been added. After cooling, the membrane is leached using another liquid non-solvent.

EP-A-0997182 proposes another process for the formation of hollow capillary membranes based on liquid-solution spinning. In this case polysulfone with the addition of polyvinylpyrrolidone (PVP) is used. PVP is injected with a liquid solution in the hole of the capillary to produce an internal layer that can induce a selective separation.

In the patent application US 2003/015466 the preparation of polyvinylidenefluoride (PVDF) capillary membranes is described. This polymer is strongly hydrophobic; therefore, as a rule, it is n ot used for membranes separation though its mechanical and chemical stability are very favourable. In this process, membrane preparation starts from a homogeneous and viscous mixture formed by PVDF, a water-soluble and PVDF compatible polymer and at least one metallic compound. During the extrusion in the annular orifice a non-solvent liquid can be added into the internal hole of the capillary to avoid its collapse. After the extrusion, by liquid phase inversion, a membrane is formed that is formed by the hydrophobic polymer as the main component, uniformly mixed with the hydrophilic polymer and the metal complex. Downstream the orifice the fibre flows in a chamber set at controlled humidity and, then, in a coagulation bath in which the solidification process continues; solidification ends in a leaching bath. Also in this case the non-solvent to be co-extruded in the hole of the capillary and to be used in the coagulation bath is water, as a rule. The fibre obtained using this technique has an asymmetric structure called finger-like, that is characterized by a layer with high porosity and elongated pores located perpendicularly to the cross section of the membrane whereas the surface layer is relatively porous.

Traditional techniques, like the ones previously described, used to produce capillary membranes using phase inversion methods, have several drawbacks that can be more relevant when these techniques are specifically used to produce blood treatment membranes. The most relevant disadvantages are:
➢ reduced possibility to modulate pores size and, more generally speaking, the characteristics of the produced membranes;
➢ the presence of solvent residues in the final membrane;
➢ formation of asymmetric structures;
➢ long formation times, up to some hours;
➢ non-environmentally friendly process due to the use of organic solvent mixtures that have to be eliminated after processing.

Starting from the previous discussion, it is evident the necessity of a new efficient, fast and cheap process to produce hollow capillary membranes to be used to treat blood and its derivatives. This process should overcome the limits of the existing techniques based on liquid-liquid phase inversion separation. Such a process should allow a better control on pore size, should shorten preparation times and reduce the use of organic solvents, which remain in the final product and are costly to recover or eliminate.

To that aim it has been considered, according to the present invention, the possibility of substituting organic solvents and water (used as non-solvent during the phase inversion process that generates capillary membranes) with dense gases or supercritical fluids.

It is known that a supercritical fluid is a compound used at temperatures and pressures higher than those of its critical point. Each pure compound, in the region of its state diagram in which the pressure is higher than the critical pressure (p_{c}) and temperature is higher than the critical temperature (T_{c}), shows properties that are intermediate between those of liquid and gases and that are extremely useful when these fluids are used as solvents. At supercritical conditions, a fluid has densities that can be similar to those of a liquid; but can show gas-like viscosities and diffusivities that are one to two orders of magnitude higher than those characteristic of liquids; therefore, solvating properties of a supercritical fluid are similar to those of a liquid, whereas, its diffusivity is high and pressure drops are extremely reduced.

Practically speaking, supercritical fluids show a solvent power (and, therefore, a selectivity) that varies with continuity with pressure and temperature. Thus, using the same fluid, in different sections of the plant it is possible to obtain different process conditions. Combining the process parameters makes it possible to obtain high velocities in the formation of solutions with liquid solvents and the complete elimination or recovery of the solvents used.

The most widely used compound for supercritical fluids processes is carbon dioxide (CO₂) because of its relatively low critical values (p_{c} = 73.8 bar, T_{c} = 31.1°C), its low cost and total absence of toxicity. Moreover, in view of the remarkable difference in volatility between CO₂ and the fluids treated, after the selective solubilization, supercritical CO₂ can be eliminated by reducing the pressure down to its gaseous state, leaving no traces in the treated matter. In the specific case of food and medical processes, the absolute non toxicity of CO₂ is fundamental; moreover, with respect to a traditional liquid solvent is remarkable the fact that no residues remain in the processed matter.

Until now various polymer extrusion processes have been proposed that are assisted by supercritical fluids (mainly supercritical CO₂). However, in these processes supercritical CO₂ is used as a viscosity reducer of the polymeric mixture, or the processes are finalized to the production of polymeric foams, e.g., closed cells structures.

To perform the supercritical assisted extrusion of polymeric foams, small quantities of supercritical CO₂ are added to the polymeric mixture during its crossing of the extruder screw. Residence time of the mixture and the process conditions are set to allow the diffusion of CO₂ inside the polymer to form a single phase. Then, the solution is decompressed through an orifice, CO₂ is released from the solution and produces bubbles that form the foamed polymer.

The US patent No. 6051174 discloses an extrusion foaming process, that also contains a device that gives a fixed shape to the foam at the exit of the extruder. The polymeric matter obtained in this process is clearly not a capillary tube and particularly it is not a semi-permeable membrane, since it is formed by closed, non-interconnected cells.

From an analysis of the literature, it results that supercritical fluids have been used in the extraction techniques for which they are already known and, in addition, for the extrusion of polymer foams, but they have not been used, so far, to produce hollow capillary membranes. According to the present invention, a procedure is proposed to obtain hollow capillary polymeric membranes using a liquid-supercritical (dense) fluid phase separation process. The process to obtain hollow capillary membranes developed according to this invention is based on a scheme that is similar to the conventional liquid solution spinning processes in which water and one or more organic solvents are used as non-solvents; but, in this case a supercritical fluid or a dense gas is used as non-solvent. Indeed, at properly selected operating conditions the supercritical fluid can act as a solvent for the liquid solvents in the polymeric mixture; whereas, it has no affinity with the polymer and acts as a non-solvent for it. Therefore, the contact between the supercritical fluid and the polymer solution produces a phase separation and the formation of a supercritical phase, that contains the liquid solvent and the non-solvent, and a polymer-rich phase. As a consequence, a semi-permeable membrane is formed that is also solvent free.

Therefore, the present invention specifically provides a process for producing hollow capillary semi-permeable membranes having symmetric structure based on a liquid-supercritical phase separation mechanism, comprising the following steps:
a) feeding to an extruder a starting mixture formed by one or more polymers solubilized in one or more liquid solvents;
b) extruding said mixture in a spinneret with the formation of a hollow capillary filament;
c) introducing the filament produced in step b) in a pressurized coagulation bath wherein one or more dense gases or supercritical fluids are flowing, thereby forming a porous capillary membrane, as a result of a supercritical phase separation.

As a rule, the process also includes a step d) wherein the supercritical solution formed during the step c), at the exit of the coagulation bath, is depressurized and one or more liquid solvents are recovered and re-used in the step a). Preferably, the dense gases or supercritical fluids are selected from the group formed by carbon dioxide, nitrogen protoxide, trifluoromethane, propane, propane in supercritical or dense conditions. According to a particularly preferred process variation, in the whole process only CO₂ is used as supercritical fluid.

Polymers that can be used to produce semi-permeable membranes according to the proposed process are preferably selected fom the group consisting of polysulfone, polymethyl methacrylate, polyurethane, cellulose acetate, polypropylene, polyacrylonitrile, polyvynilidene fluoride and their derivatives. They can be used as single polymers or in mixtures of two or more of them. The liquid solvents can be chosen in the group consisting of acetone, chloroform, N-methyl pyrrolidone, dimethyl sulfoxide, tetrahydrofurane, pyridine, dichlorobenzene, dichloromethane, ethyl alcohol and propyl alcohol.

According to a possible process alternative, during the step a) it is also possible to add small quantities of one or more supercritical fluids inside the internal orifice of the extruder and feed these one or more supercritical fluids inside the capillary fibre, in order to accelerate the formation of the internal layer of the membrane and/or to avoid the collapse of the capillary when the latter is immersed in the coagulation bath.

In another possible process alternative, the supercritical fluids fed in the internal part of the capillary fibre contain in solution a polymeric modifier and/or an additive that will be deposited on the internal part of the porous capillary membrane. In this case, the polymeric modifier and/or the additive will be deposited on the internal surface of the fibre, forming an internal layer having specific and different properties with respect to the other parts of the fibre.

Further, according to another embodiment of the invention, it is possible to introduce minor quantities of one or more supercritical fluids in the extruder together with the polymeric solution fed to the spinneret, with the aim to partly anticipate the start of the membrane formation process inside the screw of the extruder.

Preferably, the starting solution in the step a) comprises from 10% to 60% by weight of said polymer or polymers, whereas the operating conditions in the pressurized coagulation bath in step c) will be selected at a pressure within 45 and 350 bar (preferably, between 100 and 200 bar) and at a temperature between 30 and 80°C (preferably, between 40 and 60°C). The residence time of the capillary in the pressurized coagulation bath will range between 3 and 30 min, preferably, between 3 and 10 min.

A plant for producing hollow capillary semi-permeable symmetric membranes based on a liquid-supercritical phase separation mechanism according to the process of the invention may comprise the following components:
a) a screw extruder suitable to be fed with a starting solution formed by one or more polymers and one or more liquid solvents, ending with a spinneret;
b) a coagulation bath connected to the outlet of said spinneret, formed by a pressurized vessel containing one or more inlet and outlet holes for one or more supercritical fluids at the top and at the bottom of said coagulation bath;
c) at least a system to feed one or more supercritical fluids to said coagulation bath and, optionally, to said screw extruder.

In a preferred embodiment, the plant according to the invention also includes a system for the recovery of liquid solvents that comprises a separator located downstream the coagulation bath, and equipped with a depressurization system, operating the separation between supercritical fluid and liquid solvent. The plant according to the invention also contains systems to roll up, stretch, and/or replasticize the capillary membrane. The function of these devices is to obtain hollow capillary membranes that can be used in apparatuses for the treatment of blood and its derivatives.

The specific features of the invention, as well as the advantages thereof and its operating mode, will be more evident with reference to the detailed description shown below by way of example, together with some experimental results obtained by carrying out the invention. One of said experimental results is also illustrated in the enclosed drawings, wherein:

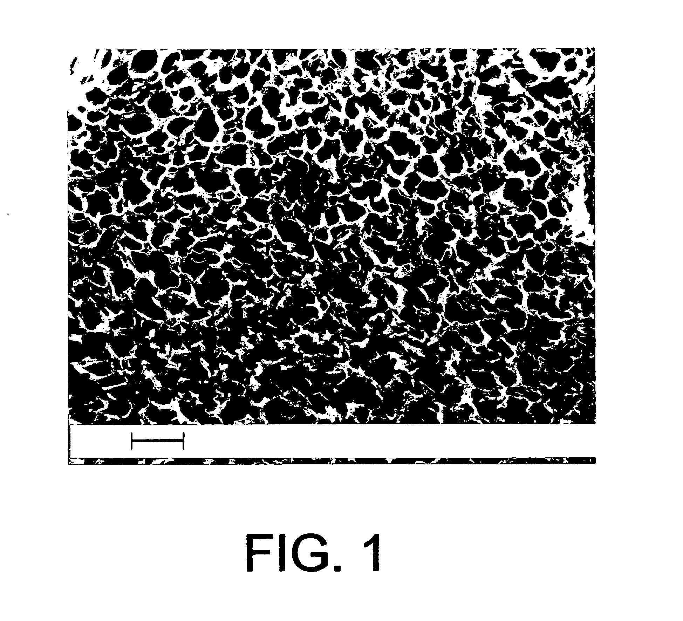

Figure 1 shows a scanning electron microscope (SEM) image of a capillary membrane obtained in accordance with the following example.

### EXAMPLE 1

In the process used to produce capillary membranes according to the invention, the solution formed by polymer and liquid solvent is fed to the screw of an extruder and, then, to the spinneret where the hollow capillary is formed. The capillary is sent to a pressurized coagulation bath in which a supercritical fluid is flowing.

The coagulation bath is formed by a stainless steel vessel (preferably a cylindrical vessel) from 2 to 9 m in length, which is connected by a flange to the extruder head and receives the extruded polymer. At the opposite end of the vessel holes are located that allow the exit of the capillary membranes formed by the liquid-supercritical fluids phase separation process. On the coagulation vessel there are also located the inlet and outlet port for supercritical fluid circulation. Said ports are located near the top and the bottom of the vessel. The thickness of the vessel used for the coagulation bath is calculated to a maximum pressure of 350 bar at a temperature of 80°C.

At the process conditions, inside the coagulation bath the supercritical fluid (preferably CO₂) rapidly extracts the solvent from the polymer solution, producing the formation of two phases: one is supercritical and is solvent-rich, and does not contain polymer, and the other is polymer-rich and is represented by the capillary, from which the solvent is continuously extracted. Operating in this manner, the resulting solid phase contains interconnected pores that are substantially uniform in size and forms a capillary semi-permeable membrane. The supercritical solution formed inside the coagulation bath is depressurized in the separator located downstream the coagulation bath, wherein the separation between the solvent and the supercritical fluid takes place. Therefore, the solvent is recovered and can be reused in the process.

It is possible to vary the process conditions, in order to process different polymers and to obtain different pore size and membrane structures.

### EXAMPLE 1a

In a two screw extruder a solution is fed that is formed by polysulfone and N-methyl pyrrolidone and is characterized by a content in polymer ranging between 15 and 40% by weight (preferably between 29 and 34% by weight). The solution is extruded in a spinneret. A small amount of supercritical or dense CO₂ is sent to the internal hole of the capillary to prevent the collapse of the fibre and to aid the phase separation process.

The hollow fibre obtained in this manner is sent to a pressurized coagulation bath in which supercritical CO₂ is flowing at a pressure between 80 and 160 bar and at a temperature between 35 and 45°C. The fibre has a residence time in the coagulation bath ranging between 3 and 10 min (preferably between 5 and 7 min) during which liquid supercritical phase separation takes place and the porous interconnected structure (membrane) is formed. The membrane is then sent to roll up, stretching and replasticization processes.

Operating in this manner, porosities with mean diameters ranging between 0.1 and 5 micron are obtained. As previously explained, Figure 1 is a SEM image of a section of the obtained capillary membrane, and shows its substantially uniform structure characterized by symmetric, micrometric cells.

### EXAMPLE 1b

In a two screw extruder a solution is fed that is formed by polysulfone and chloroform and is characterized by a content in polymer ranging between 15 and 45% by weight (preferably between 25 and 35% by weight). The solution is extruded in a spinneret. A small amount of supercritical or dense CO₂ is sent to the internal hole of the capillary to prevent the collapse of the fibre and to aid the phase separation process.

The hollow fibre obtained in this manner is sent to a pressurized coagulation bath in which supercritical CO₂ is flowing at a pressure between 80 and 140 bar and at a temperature between 35 and 45°C. The fibre has a residence time in the coagulation bath ranging between 3 and 9 min (preferably between 5 and 7 min) during which liquid supercritical phase separation takes place and the porous interconnected structure (membrane) is formed. The membrane is then sent to roll up, stretching and replasticization processes.

### EXAMPLE 1c

In a two screw extruder a solution is fed that is formed by polymethyl methacrylate (PMMA) and dimethyl sulfoxide (DMSO) and is characterized by a content in polymer ranging between 20 and 45% by weight (preferably between 25 and 35% by weight). The solution is extruded in a spinneret. A small amount of supercritical or dense CO₂ is sent to the internal hole of the capillary to prevent the collapse of the fibre and to aid the phase separation process.

The hollow fibre obtained in this manner is sent to a pressurized coagulation bath in which supercritical CO₂ is flowing at a pressure between 180 and 250 bar and at a temperature between 35 and 60°C. The fibre has a residence time in the coagulation bath ranging between 3 and 9 min (preferably between 5 and 7 min) during which liquid supercritical phase separation takes place and the porous interconnected structure (membrane) is formed. The membrane is then sent to roll up, stretching and replasticization processes.

A membrane is obtained that is characterized by symmetric, micrometric cells, that has on the external surface a non porous skin with a thickness of some microns.

As it is possible to deduce from the foregoing description, the major advantages of the process for producing capillary membranes according to the present invention may be summarized as follows.
➢ It is possible to modulate pore diameter of the capillary membrane in a wide range of diameters, by varying the supercritical fluid process conditions. Indeed, it is possible to modify the rate of solvent extraction from the polymer solution by varying pressure and temperature and, as a consequence, it is possible to modulate the size of membrane pores.
➢ The membrane formation is faster if compared to liquid phase separation processes. Indeed, supercritical-based phase separation is faster due to the higher diffusivities that characterize supercritical fluids.
➢ Fast and complete elimination of liquid solvents, that can be separated by supercritical fluids depressurization, recovered and reused.
➢ Lower environmental impact due to the reduction and the more efficient recovery of dangerous organic solvents.
➢ Faster process and lower costs, mainly due to the absence of posttreatments necessary to purify the membrane.

The present invention has been disclosed with particular reference to some specific embodiments thereof, but it should be understood that modifications and changes may be made by the persons skilled in the art without departing from the scope of the invention as defined in the appended claims.

## Claims

1. A process for producing hollow capillary semi-permeable membranes having symmetric structure based on a liquid-supercritical phase separation mechanism, comprising the following steps:
a) feeding to an extruder a starting mixture formed by one or more polymers solubilized in one or more liquid solvents;
b) extruding said mixture in a spinneret with the formation of a hollow capillary filament;
c) introducing the filament produced in step b) in a pressurized coagulation bath wherein one or more dense gases or supercritical fluids are flowing, thereby forming a porous capillary membrane, as a result of a supercritical phase separation.

2. A process according to claim 1, also comprising a step d) wherein the supercritical solution formed during the step c) is depressurized and one or more liquid solvents are recovered and recycled in the process before the said step a).

3. A process according to claims 1 or 2 wherein said one or more dense gases or supercritical fluids are selected from the group consisting of carbon dioxide, nitrogen protoxide, trifluoromethane, propane in supercritical or dense conditions.

4. A process according to any one of claims 1-3, wherein said one or more polymers are selected from the group consisting of polysulfone, polymethyl methacrylate, polyurethane, cellulose acetate, polypropylene, polyacrylonitrile, polyvinylidene fluoride and their derivatives.

5. A process according to any one of claims 1-4, wherein said one or more liquid solvents are selected from the group consisting of acetone, chloroform, N-methyl pyrrolidone, dimethyl sulfoxide, tetrahydrofurane, pyridine, dichlorobenzene, dichloromethane, ethyl alcohol and propyl alcohol.

6. A process according to any one of claims 1-5, wherein said step a) also comprises the addition of one or more supercritical fluids inside the internal orifice of the spinneret to obtain the introduction of said one or more supecritical fluids inside the capillary. percritical fluids inside the capillary.

7. A process according to claim 6, wherein said one or more supercritical fluids to be introduced inside the capillary contain in solution a polymer modifier and/or an additive suitable to be deposited on the internal surface of the porous capillary membrane that is forming.

8. A process according to any one of claims 1-7, wherein said step a) also comprises the introduction of small quantities of said supercritical fluids inside the extruder, to obtain a mixture of said supercritical fluid with the polymeric solution fed to the spinneret.

9. A process according to any one of claims 1-8, wherein said starting mixture in step a) comprises from 10 to 60% by weight of said one or more polymers.

10. A process according to any one of claims 1-9, wherein, in said step c) the said one or more supercritical fluids are fed at a pressure between 45 and 350 bar and at a temperature between 30 and 80°C.

11. A process according to claim 10, wherein in said step c) pressure is comprised between 100 and 200 bar.

12. A process according to claims 10 or 11, wherein in said step c) temperature is comprised between 40 and 60 °C.

13. A process according to any one of claims 10- 12, wherein in said step c) the residence time of the capillary in the pressurized coagulation bath ranges between 3 and 30 min.

14. A process according to claim 13, wherein the said residence time preferably ranges between 3 and 10 min.

## Patentansprüche

1. Verfahren zur Herstellung von semipermeablen Hohlkapillarmembranen mit symmetrischer Struktur, basierend auf einem Prinzip der Trennung einer flüssigen Phase und einer superkritischen Phase, umfassend die folgenden Schritte:
a) Einführen einer Ausgangsmischung, gebildet aus einem oder mehreren Polymer(en), das/die in einem oder mehreren flüssigen Lösungsmittel(n) solubilisiert ist/sind, in einen Extruder;
b) Extrudieren der Mischung in einer Spinndüse unter Bildung eines Hohlkapillarfilaments;
c) Einführen des in Schritt b) gebildeten Filaments in ein unter Druck stehendes Koagulierungsbad, worin ein oder mehrere dichte(s) Gas(e) oder superkritische(s) Fluid(e) fließt/fließen, wodurch eine poröse Kapillarmembran als Ergebnis der Abtrennung einer superkritischen Phase gebildet wird.

2. Verfahren nach Anspruch 1, ferner umfassend einen Schritt d), worin die während des Schrittes c) gebildete superkritische Lösung druckentlastet wird und ein oder mehrere flüssige(s) Lösungsmittel rückgewonnen und in das Verfahren vor dem Schritt a) rückgeführt wird/werden.

3. Verfahren nach Anspruch 1 oder 2, wobei das/die eine oder mehreren dichte(n) Gas(e) oder superkritische(n) Fluid(e) aus der Gruppe, welche aus Kohlenstoffdioxid, Stickstoffprotoxid, Trifluormethan, Propan in superkritischen oder dichten Zuständen besteht, ausgewählt ist/sind.

4. Verfahren nach irgendeinem der Ansprüche 1-3, wobei das/die eine oder mehreren Polymer(e) aus der Gruppe, welche aus Polysulfon, Polymethylmethacrylat, Polyurethan, Celluloseacetat, Polypropylen, Polyacrylnitril, Polyvinylidenfluorid und deren Derivaten besteht, ausgewählt ist/sind.

5. Verfahren nach irgendeinem der Ansprüche 1-4, wobei das/die eine oder mehreren flüssigen Lösungsmittel aus der Gruppe, welche aus Aceton, Chloroform, N-methylpyrrolidon, Dimethylsulfoxid, Tetrahydrofuran, Pyridin, Dichlorbenzol, Dichlormethan, Ethylalkohol und Propylalkohol besteht, ausgewählt ist/sind.

6. Verfahren nach irgendeinem der Ansprüche 1-5, wobei der Schritt a) auch die Zugabe von einem oder mehreren superkritischen Fluid(en) innerhalb der inneren Öffnung der Spinndüse umfasst, um die Einführung des/der einen oder mehreren superkritischen Fluids/e in das Innere der Kapillare zu erreichen.

7. Verfahren nach Anspruch 6, wobei das/die eine oder mehreren superkritische(e) Fluid(e), welche(s) in das Innere der Kapillare eingeführt werden soll(en), in Lösung einen Polymermodifikator und/oder ein Additiv enthält/enthalten, welcher/s geeignet ist, auf der inneren Oberfläche der sich bildenden porösen Kapillarmembran abgeschieden zu werden.

8. Verfahren nach irgendeinem der Ansprüche 1-7, wobei der Schritt a) auch die Einführung kleiner Mengen der superkritischen Fluide in den Extruder umfasst, um eine Mischung des superkritischen Fluids mit der Polymerlösung, die der Spinndüse zugeführt wird, zu erhalten.

9. Verfahren nach irgendeinem der Ansprüche 1-8, wobei die Ausgangsmischung in Schritt a) 10 bis 60 Gew.-% des/der einen oder mehreren Polymers/e umfasst.

10. Verfahren nach irgendeinem der Ansprüche 1-9, wobei in dem Schritt c) das/die eine oder mehreren superkritische(n) Fluid(e) bei einem Druck zwischen 45 und 350 bar und einer Temperatur zwischen 30 und 80°C zugeführt wird/werden.

11. Verfahren nach Anspruch 10, wobei in dem Schritt c) der Druck zwischen 100 und 200 bar liegt.

12. Verfahren nach den Ansprüchen 10 oder 11, wobei in dem Schritt c) die Temperatur zwischen 40 und 60°C liegt.

13. Verfahren nach irgendeinem der Ansprüche 10-12, wobei in dem Schritt c) die Verweilzeit der Kapillare in dem unter Druck stehenden Koagulierungsbad im Bereich zwischen 3 und 30 Minuten liegt.

14. Verfahren nach Anspruch 13, wobei die Verweilzeit vorzugsweise im Bereich zwischen 3 und 10 Minuten liegt.

## Revendications

1. Procédé de production de membranes capillaires creuses semi-perméables présentant une structure symétrique reposant sur un mécanisme de séparation de phase liquide-supercritique, comprenant les étapes consistant à :
a) amener dans une extrudeuse un mélange de départ formé par un ou plusieurs polymères solubilisés dans un ou plusieurs solvants liquides ;
b) extruder ledit mélange dans une filière avec formation d'un filament capillaire creux ;
c) introduire le filament produit à l'étape b) dans un bain de coagulation sous pression, dans lequel s'écoulent un ou plusieurs gaz denses ou fluides supercritiques, formant de ce fait une membrane capillaire poreuse comme suite d'une séparation de phase supercritique.

2. Procédé selon la revendication 1, comprenant aussi une étape d) dans laquelle la solution supercritique formée lors de l'étape c) est mise hors pression et un ou plusieurs solvants liquides sont récupérés et recyclés dans le procédé avant ladite étape a).

3. Procédé selon la revendication 1 ou 2, dans lequel ledit ou lesdits gaz denses ou fluides supercritiques sont sélectionnés dans le groupe composé du dioxyde de carbone, du protoxyde d'azote, du trifluorométhane, du propane dans des conditions denses ou supercritiques.

4. Procédé selon l'une quelconque des revendications 1 à 3, dans lequel ledit ou lesdits polymères sont sélectionnés dans le groupe composé de la polysulfone, du méthacrylate de polyméthyle, du polyuréthane, de l'acétate de cellulose, du polypropylène, du polyacrylonitrile, du fluorure de polyvinylidène et de leurs dérivés.

5. Procédé selon l'une quelconque des revendications 1 à 4, dans lequel ledit ou lesdits solvants liquides sont sélectionnés dans le groupe composé de l'acétone, du chloroforme, de la N-méthyl-pyrrolidone, du diméthylsulfoxyde, du tétrahydrofuranne, de la pyridine, du dichlorobenzène, du dichlorométhane, d'un alcool d'éthyle et d'un alcool de propyle.

6. Procédé selon l'une quelconque des revendications 1 à 5, dans lequel ladite étape a) comprend aussi l'addition d'un ou de plusieurs fluides supercritiques à l'intérieur de l'orifice interne de la filière pour obtenir l'introduction dudit ou desdits fluides supercritiques à l'intérieur du capillaire.

7. Procédé selon la revendication 6, dans lequel ledit ou lesdits fluides supercritiques à introduire à l'intérieur du capillaire contiennent en solution un modificateur de polymère et/ou un additif approprié(s) pour être déposé(s) sur la surface interne de la membrane capillaire poreuse qui se forme.

8. Procédé selon l'une quelconque des revendications 1 à 7, dans lequel ladite étape a) comprend aussi l'introduction de petites quantités desdits fluides supercritiques à l'intérieur de l'extrudeuse pour obtenir un mélange dudit fluide supercritique avec la solution polymère amenée dans la filière.

9. Procédé selon l'une quelconque des revendications 1 à 8, dans lequel ledit mélange de départ de l'étape a) comprend 10 à 60 % en poids dudit ou desdits polymères.

10. Procédé selon l'une quelconque des revendications 1 à 9, dans lequel à ladite étape c), ledit ou lesdits fluides supercritiques sont amenés à une pression comprise entre 45 et 350 bar, et à une température comprise entre 30 et 80 °C.

11. Procédé selon la revendication 10, dans lequel à ladite étape c), la pression est comprise entre 100 et 200 bar.

12. Procédé selon la revendication 10 ou 11, dans lequel à ladite étape c), la température est comprise entre 40 et 60 °C.

13. Procédé selon l'une quelconque des revendications 10 à 12, dans lequel à ladite étape c), le temps de séjour du capillaire dans le bain de coagulation sous pression est compris entre 3 et 30 minutes.

14. Procédé selon la revendication 13, dans lequel ledit temps de séjour est de préférence compris entre 3 et 10 minutes.
